# EUROPEAN PATENT SPECIFICATION

(11) **EP 2 422 959 B1**
(45) Date of publication and mention of the grant of the patent: **19.08.2020**
(21) Application number: 10425284.6
(22) Date of filing: 31.08.2010
(51) Int. Cl.: B29C 70/44, B29C 70/54, B60B 5/02, B26F 1/24, B29C 33/00, B26D 7/00, B29K 701/12, B29K 701/10, B29C 70/74, B60B 21/06, B29K 679/00, B29C 65/00, B29L 31/32, B29L 31/30

(54) **Process for manufacturing a bicycle wheel rim and rim obtainable with such a process**
Verfahren zur Herstellung einer Radfelge für ein Fahrrad und auf diese Weise hergestellte Felge
Procédé de fabrication de jante de roue de bicyclette et jante ainsi obtenue grâce à ce procédé

(43) Date of publication of application: 29.02.2012
(60) Divisional application: 17161160.1
(73) Proprietor: Campagnolo S.r.l., 36100 Vicenza (VI) (IT)
(72) Inventor: Meggiolan, Mario, 36051 Creazzo VI (IT); Feltrin, Mauri, 36024 Nanto VI (IT); Maltauro, Paolo, 36100 Vicenza (IT)
(74) Representative: Porta & Consulenti Associati S.p.A.

(56) References cited:
- EP-A2- 0 202 924
- DE-A1- 3 016 862
- DE-A1-102007 052 674
- FR-A1- 2 820 359
- FR-A1- 2 926 745
- US-A1- 2007 187 867
- US-A1- 2010 090 518

## Description

The invention concerns a process for manufacturing a bicycle wheel rim at least in part made of composite material, and a rim obtainable with such a process.

In the present description and in the attached claims, under "composite material" a material comprising structural fibres incorporated in a polymeric material is meant to be indicated.

Bicycle rims made of composite material are known and are typically manufactured through compression moulding in the case of thermosetting polymeric material and also through injection moulding in the case of thermoplastic polymeric material, with a variety of cross-sectional shapes.

When the rim is thereafter associated with a hub to form a bicycle wheel, a plurality of perforated seats for the attachment of the spokes must be made in the rim. In the present description and in the attached claims, the term "perforated spoke attachment seat" is used in the broadest sense, to encompass both a seat in which a spoke, provided for example with a widened head or with a threading, is directly inserted, and a seat in which a nipple or other spoke attachment element is inserted.

The holes must be made in the positions required by the spoke pattern of the particular wheel, namely according to the number of spokes, their distribution along the circumference of the rim, their position in the cross section of the rim, and the direction taken up by each spoke, for example by virtue of its radial or tangential attachment to the hub and/or the camber angle. In order to do this, the moulded rim is typically transferred to a perforation station where a machine is suitably programmed with the perforation data.

DE 30 16 862 A1 discloses a wheel comprising a rim of fiber-reinforced plastic according to the preamble of independent claim 7 comprising bores for nipples provided all around with reinforcement laminates and inserts, said bores being drilled after moulding or alternatively produced during moulding of the rim by placing suitable pins in the lamination mould.

EP 0 202 924 A2 discloses a method of making a fiber-reinforced moulded racquet frame, comprising placing a core comprising at least one layer of woven reinforcing fibers in a mould shaped to define the frame, providing a plurality of side-action devices each including at least one needle-like projection, and piercing with the projections the weave of the woven reinforcing fibers and the remainder of the core, extending the projections across the mould cavity to define respective stringing-holes passing radially through the moulded frame. The document also discloses a corresponding mould used in the method.

FR 2 926 745 A1 discloses a method for making a hole in an already moulded piece formed mainly of fibers held in a matrix of thermoplastic material, said method comprising heating locally at least at the location of the hole to bring the thermoplastic matrix from a non-plastic state to a plastic state; spacing the fibers held by the matrix in the desired position for the hole, by radially pushing the material in the plastic state of said matrix to form a pilot hole; if necessary, heat the matrix around the pilot hole and gradually move the fibers; and cool the matrix so as to bring it back to the non-plastic state.

US 2010/0090518 A1 discloses a composite rim used in spoked wheels, such as bicycle wheels, having molded-in spoke holes along with a method of fabricating the composite rim. The bearing and loading strength of the rim is improved over composite rims wherein the spoke holes are drilled therein after fabrication of the rim hoop.

The technical problem at the basis of the invention consists of devising an alternative process for manufacturing a bicycle wheel rim at least in part made of composite material.

In one aspect thereof, the invention concerns a process for manufacturing a bicycle wheel rim at least in part made of composite material, comprising the features of claim 1.

Through the perforation prior to the moulding, the subsequent perforation working step and the relative working station are avoided, with the remarkable advantage of saving the manufacturing time and cost associated with this perforation working step, as well as with the operation of programming the machine. The operation of forming the perforated seats is indeed carried out in the moulding station, at the same time as the steps of assembling in the mould the composite material and possible components made of other material. Nevertheless, the scope of the invention encompasses making one or more additional seats after moulding.

Moreover, by making the perforated seats through displacement of structural fibre and therefore substantially without removal of structural fibre, holes are obtained that are without burrs and sheared fibres, which conversely result from the material removal machining and which represent a danger of injuries for the operator, therefore increasing the safety of the production line. Nevertheless the scope of the invention encompasses the shearing and/or removal of a negligible portion of fibre.

Since pre-impregnated fibres are used, the polymeric material is also substantially displaced instead of being removed.

Moreover, through such making of the perforated seats a stronger rim is produced, as explained in greater detail later on.

It is worthwhile emphasising that the process according to the invention follows an unusual approach since it involves the diversification of the rims in accordance with the different spoke patterns already during the moulding step.

The step of forming at least one perforated seat is carried out in a mould in which said moulding step is carried out.

Preferably, the step of forming at least one perforated seat is carried out through a pointed but not cutting tool.

More preferably, the step of forming at least one perforated seat is carried out by inserting a pointed but not cutting tool through the pre-impregnated structural fibre into a hole of a mould in which said moulding step is carried out, so that the hole of the mould univocally defines the position and the direction of the perforated seat. Although it can involve making a special mould for the specific spoke pattern, this provision makes the perforation operation extremely quick.

Outside of the scope of the present invention, the step of forming at least one perforated seat can take place on the dry structural fibre, before incorporation in the polymeric material.

The step of forming at least one perforated seat takes place on the structural fibre preimpregnated with the polymeric material.

The step of forming at least one perforated seat is preferably carried out at the same time as a step of slightly heating the polymeric material, so as to decrease its viscosity and increase the capability of the structural fibre to move within the polymeric material.

Said process comprises the step of coupling an insert provided with a hole at said at least one perforated seat before said moulding step.

In addition, preferably said process comprises the step of sealing said at least one perforated seat during said moulding step.

When these two provisions are both carried out, preferably the process comprises the steps of providing an auxiliary element having a shank and a head, inserting the shank of said auxiliary element into said hole of said insert and into said hole of the mould and, after the moulding step, removing said auxiliary element.

The auxiliary element is preferably forced into said hole of the mould so as to stay in position by mechanical interference during the moulding step.

Alternatively or in addition, the auxiliary element can be kept under traction towards the centre of the rim being formed during the moulding step.

More preferably, said hole of the mould is a through hole.

Even more preferably, said auxiliary element inserted into said hole of the insert is inserted into said through hole of the mould from the side of the moulding cavity and removed from the opposite side.

Preferably, in said step of providing an auxiliary element, the head has a weakening notch, which makes it easier to deform the head for the extraction of the auxiliary element from the opposite side to that of insertion.

Said auxiliary element can be used as said tool for carrying out said step of forming said at least one perforated seat, instead of providing a distinct tool and the two distinct steps of perforating and inserting the auxiliary element into the hole of the mould.

The process of the invention can comprise the step of co-moulding an outer rim component, made of metallic or composite material, with said part of bicycle rim made of composite material.

In the composite material, said structural fibres are typically selected from the group consisting of carbon fibres, glass fibres, boron fibres, aramid fibres, ceramic fibres and combinations thereof, carbon fibre being preferred.

The polymeric material of said composite material can be, outside of the scope of the present invention, thermoplastic, but according to the present invention it is thermosetting, and preferably it is a thermosetting resin.

The structural fibres of said composite material are preferably woven, and even more preferably the material is arranged so that the directions of warp and weft form an angle of 45° with the circumferential direction of the rim.

Alternatively, said structural fibres of said composite material can be unidirectional. In this case preferably different layers are arranged so that the directions of the fibres form angles going opposite ways, and preferably +45° and -45°, with the circumferential direction of the rim.

Still alternatively, the composite material can comprise agglomerates (substantially two-dimensional sheets or three-dimensional pieces) of segments of fibre, inside which agglomerates the segments of fibre are usually arranged parallel to one another or also according to a woven structure.

Still alternatively, said structural fibres of said composite material can be randomly arranged within said polymeric material.

Said moulding step comprises subjecting the thermosetting composite material in the mould to a pressure and temperature profile so as to cross-link said thermosetting polymeric material of said composite material.

Typically, said step of subjecting to a pressure and temperature profile comprises subjecting the composite material to a pressure comprised between 1 bar and 20 bar, preferably between 5 and 15 bar, more preferably of 8 bar, and to a temperature comprised between 60°C and 300°C, preferably between 80°C and 180°C, more preferably of 140° for a time period comprised between 5 min and 3 hours, preferably comprised between 8 min and 2 hours, and more preferably 1 hour.

Outside of the scope of the present invention, when the polymeric material of the bicycle component is of the thermoplastic type, said moulding step typically comprises melting said thermoplastic polymeric material, and injecting said composite material under pressure into a mould where said structural fibres are arranged, kept at a temperature below the softening temperature of the thermoplastic material, so as to solidify the composite material.

In such case, the temperature of the mould is preferably comprised between 60°C and 300°C, more preferably between 80° and 180° and even more preferably it is 140°C, and the injection pressure is preferably comprised between 1 bar and 15 bar.

In another aspect, the invention concerns a bicycle rim according to claim 7.

In the present description and in the attached claims, under "in the neighbourhood" of a hole a region extending about the hole having a size comparable to that of the hole itself, or even smaller than that of the hole, is meant to be indicated.

In the present description and in the attached claims, under "amassment" of structural fibres a region in which the local density of fibres is greater than a nominal density of the fibres in the composite material is meant to be indicated. Hence, if the composite material has a determined nominal density of fibres, it will, in every region of the wall distant from the holes, and in particular outside of the neighbourhood of the hole, have a density of fibres within a tolerance range about the nominal density, and, in at least one region in the neighbourhood of the hole, a density of fibres greater than the upper extreme of such a tolerance range.

In an embodiment the composite material in the regions without perforated seats comprises unidirectional or bidirectional fibres, and at said hole some fibres have a length with curvilinear progression, in particular substantially semi-circular.

Said bicycle rim further comprises an insert having a through hole constrained to, and co-moulded with, said composite material at said at least one perforated seat.

Said insert advantageously increases the resistance of the rim to the traction stresses from the spokes of the wheel; moreover, the provision of constraining the insert to the composite material prevents wearing by friction due to the sliding of the insert on the composite material.

Preferably, said insert comprises an elongate body having said first surface with a shape substantially matching the rim at said at least one spoke attachment seat.

Through such a provision, the insert is in contact with the rim over all or substantially all of the first surface, and therefore it distributes the traction stresses of the spokes of the wheel in which the rim is inserted over all such a surface in an even manner.

Preferably, said through hole of the insert has a predetermined inclination with respect to the plane tangent to the first surface at the hole itself.

Through this provision it is possible to adapt the insert to the direction that the spoke must take up in the wheel, in particular for spokes with radial and tangential or non-radial attachment to the hub, respectively, and/or because of the camber angle.

Said insert comprises an edge projecting along at least one section of said first surface.

The insert is more effectively constrained in position through the amassment of polymeric material on such an edge.

The various provisions described above with reference to the insert represent innovative aspects in themselves.

Further characteristics and advantages of the invention will become clearer from the description of some preferred embodiments thereof, made with reference to the attached drawings, in which:
- FIGs. 1-16 schematically illustrate various sequential steps of an embodiment of the process of the invention, and each represents a half cross-section at the position of a spoke attachment seat,
- FIGs. 17, 18 schematically illustrate holes in a rim made of composite material according to the invention,
- FIGs. 19, 20 schematically illustrate holes in a rim made of composite material according to the prior art,
- FIG. 21 is a perspective view of a first embodiment of an insert according to the invention, and
- FIG. 22 is a perspective view of a second embodiment of an insert according to the invention.

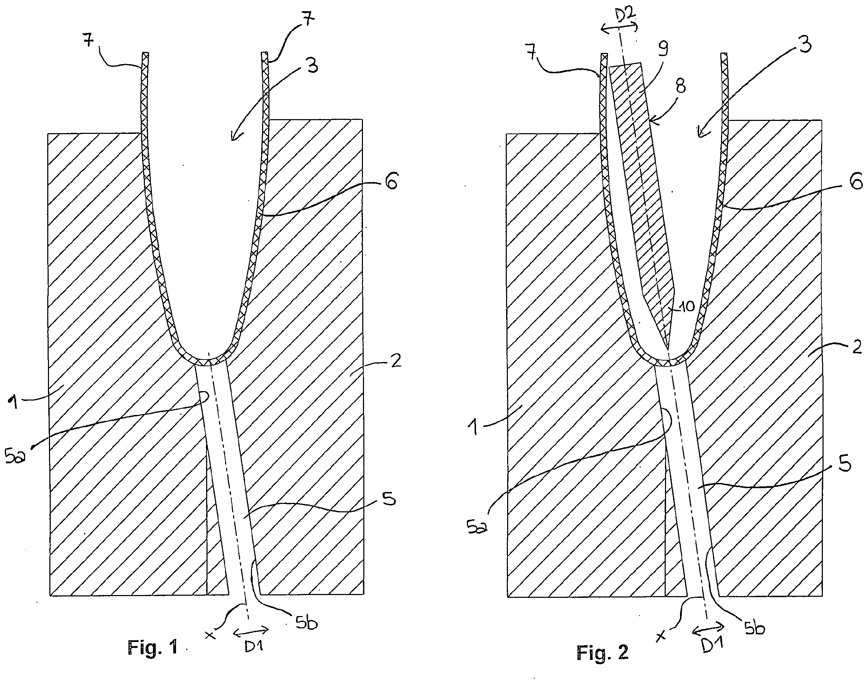

A preferred embodiment of the process according to the invention is now described with reference to FIGs. 1 to 16.

With reference to FIG. 1, two inner elements 1, 2 of a mould are coupled together to define an inner portion 3 of a moulding cavity.

In the present description and in the attached claims, the terms "inner" and "outer" refer to the radial direction of the bicycle rim or, in some contexts, they can refer to the direction taken up by a spoke of the bicycle wheel, a direction that is only generically radial. In any case, said terms are used to indicate proximal and distal, respectively, with respect to the rotation axis of the rim.

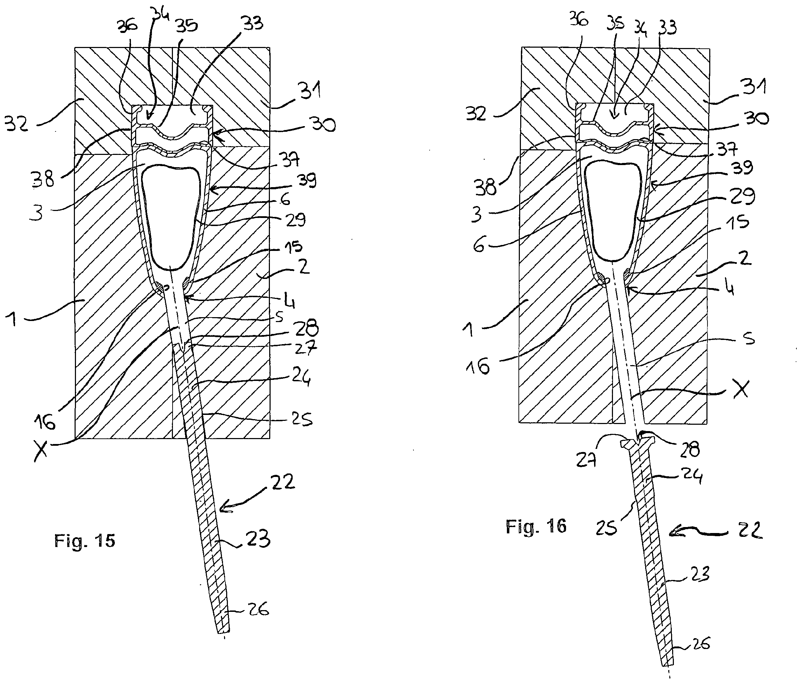

In the embodiment shown, the moulding cavity is shaped to make a symmetrical rim, in particular for tubeless tyres, as can be seen in particular in FIG. 16. Moreover, for reasons that will become clear hereinafter, in the illustrated embodiment the inner mould element 1 has a slightly shorter extent in the radial direction than that of the inner mould element 2.

The inner mould elements 1, 2 are more specifically annular elements a half cross-section of which is shown in FIGs. 1-16, made at a perforated spoke attachment seat to be formed in the bicycle wheel rim, the spoke attachment seat being indicated with reference numeral 4 in the following figures.

At the spoke attachment seat 4, the assembly of inner mould elements 1, 2 comprises a hole 5. The diameter of the hole 5 is indicated with D1 and corresponds to the nominal diameter of the spoke attachment seats to be formed in the rim, or it is slightly greater than such a nominal diameter.

In the embodiment shown, the hole 5 is a through hole made in part in the mould element 1 - hole section 5a - and in part in the mould element 2 - hole section 5b -, and it extends according to a direction that, as will become clearer hereinafter, corresponds to the direction according to which the spoke housed in the seat 4 of the rim once formed will extend. Such a direction is indicated by axis X.

In the illustrated case, the axis X of the hole 5 extends in the plane of the figure, namely in a transversal plane of the rim, and it is not perpendicular to the axis of symmetry of the mould and of the rim being formed (namely, the rotation axis of the wheel). The corresponding spoke is therefore of the type with radial attachment to the hub with a certain camber. Those skilled in the art will understand that other holes are provided in suitable positions along the circumferential direction of the mould elements 1, 2, with suitable inclination according to the desired camber.

Since in certain spoke patterns the seats 4 in the rim may not be aligned along a single middle plane of the rim and/or the spokes can have a tangential or in any case non-radial attachment to the hub, the holes 5 in the mould elements 1, 2 will have suitable directions and positions, and each hole 5 could also extend in one of the elements 1, 2 only.

The mould elements 1, 2 preferably have match means (not shown) like for example centring pins and holes, reference marks and the like, to ensure that when they are coupled together, the two sections 5a, 5b of each hole 5 in the two elements 1, 2 are correctly aligned to altogether define the hole 5 itself.

Again with reference to FIG. 1, the inner portion 3 of the moulding cavity is coated with a composite material 6.

More specifically, the inner portion 3 of the moulding cavity is coated with one or more layers of sheet composite preimpregnated material 6. Such materials are generally known in the field as Sheet Moulding Compounds (SMC) or "prepreg".

The sheet composite material 6 is arranged so as to have sections 7 projecting radially outside of the inner portion 3 of moulding cavity. In the case of several layers, only some layers can contribute to said projecting sections 7, while one or more layers can strengthen for example the area where the spoke attachment seats 4 must be formed.

The arrangement of the composite material 6 in the portion 3 of moulding cavity can take place by hand or be automated.

With reference to FIGs. 2 to 5, a pointed but not cutting tool, such as a drift 8, is inserted from the inner portion 3 of moulding cavity through the composite material 6 and partially into the hole 5 of the mould elements 1, 2. The tool 8 is then extracted in the opposite direction.

The tool 8 has a cylindrical shank 9 having a diameter D2 and a tip 10 or a tapered part ending substantially with a point.

The diameter D2 corresponds to the nominal diameter of the spoke attachment seats 4 to be formed in the rim, or it is slightly greater than such a nominal diameter, and it is also substantially equal to or slightly smaller than the diameter D1 of the hole 5.

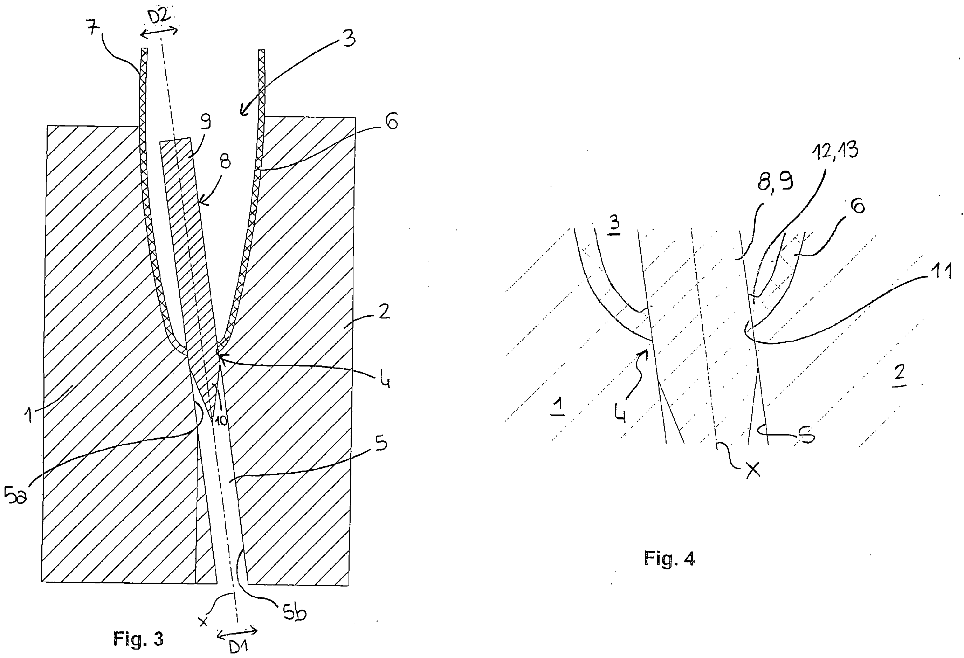

The depth of insertion of the tool 8 is selected so that, besides the tip 10, a part of cylindrical shank 9 is also inserted into the hole 5, as shown in FIG. 3.

In such a step of inserting the tool or drift 8, a hole is made in the composite material 6, substantially without shearing and removal of the structural fibres. On the contrary, thanks to the fact that the composite material has not yet hardened through the moulding and that therefore the fibres can move within the matrix of polymeric material, the fibres are progressively displaced by the tip 10 of the tool 8.

The holes made in the composite material 6, forming part of the perforated seats 4, therefore have a nominal diameter substantially equal to D2.

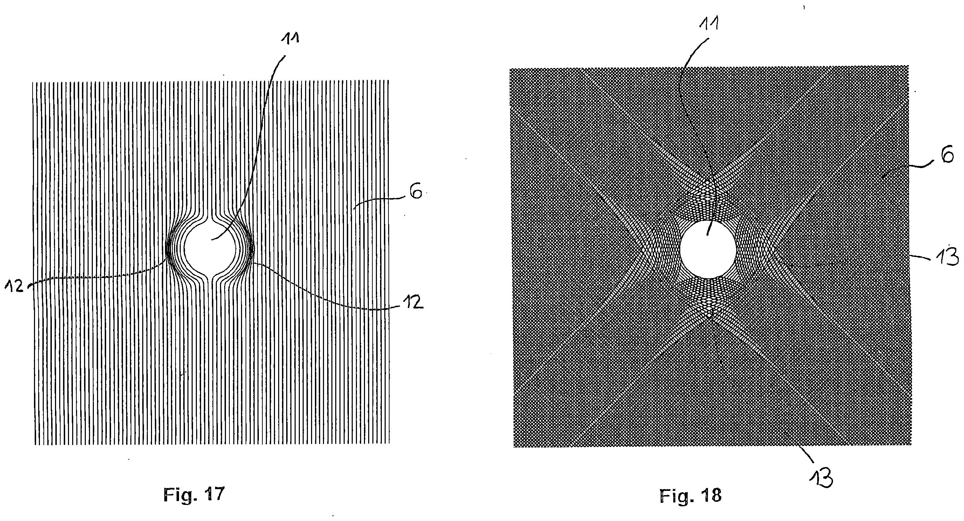

FIGs. 17 and 18 schematically show the progression of the fibres about the hole 11 in the case of unidirectional fibre and in the case of woven fibre, respectively. It is worth emphasising that such a progression of the fibres stays in the finished rim even after the moulding step, described hereinafter.

It should be noted that the fibres, displaced by the tip 10 of the tool 8, gather about the edge of the hole 11, therefore giving an advantageous strengthening of such a region, which is critical from the point of view of the stresses.

More specifically, FIG. 17 shows that there is a displacement of some fibres in the direction transversal to the same, the fibres sliding longitudinally within the matrix material and/or being subjected to a slight traction and/or flexure. Therefore, two amassments 12 of fibre form in diametrically opposite positions with respect to the hole 11.

In FIG. 18, where the fibre is schematised as woven with directions of warp and weft at 90°, the displacement of the weft fibres and of the warp fibres takes place in an analogous manner to what is shown in FIG. 17 and the result is four amassments 13 of fibre in four positions staggered by 90° about the hole 11.

Of course, in the real case the progressions of the fibres and of the amassments 12, 13 can diverge from the ideal one represented in FIGs. 17, 18.

The magnification of FIG. 4 also schematically shows the amassment 12, 13 of composite material 6 about the edge of the hole 11, on the side of the moulding cavity 3.

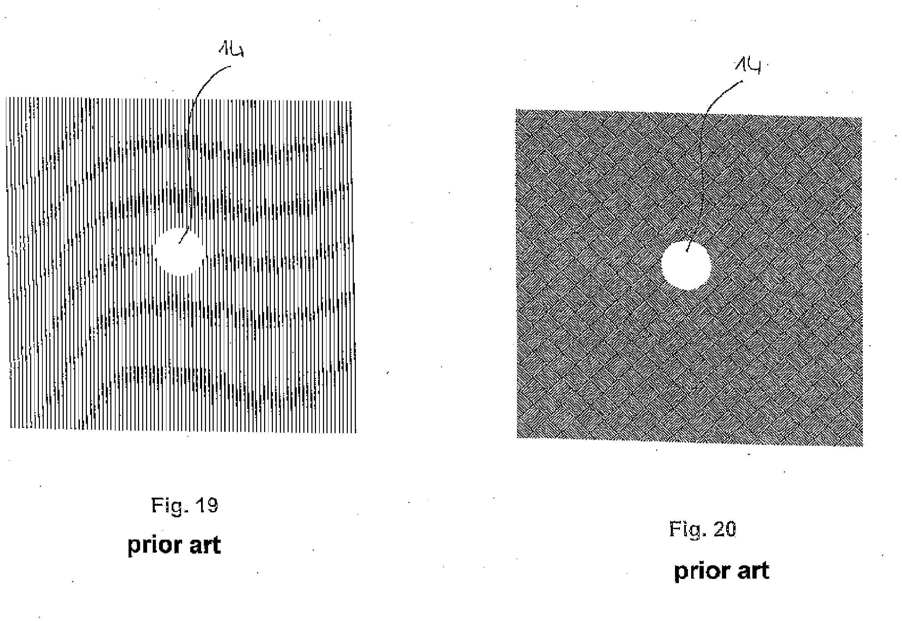

For comparison, FIGs. 19 and 20 schematically show the progression of the fibres about a hole 14 obtained in a conventional manner, in other words by drilling after the moulding of the composite material, in the case of unidirectional fibre and in the case of fibre in woven unidirectional strips, respectively. It should be noted that in this case the fibres are sheared at the edge of the hole 14. If on the one hand the result is a hole 14 that is more regularly defined with respect to the hole 11 made according to the invention, on the other hand the fibres sheared about the hole 14 define discontinuities, at which the tensions are concentrated.

The sheared fibres can therefore start cracks, fractures, ravelling of the material and other defects, as well as representing a potential danger of injuries.

With the process of the invention, on the other hand, such discontinuities of the fibres are advantageously avoided.

It should be understood that, in the hole 11 made by displacement of material according to the invention, shearing could also take place, but only of a scarce number of fibres that are located right at the tip end of the tool 8. In the case of preimpregnated fibres, the polymeric material is also substantially displaced by the tool 8 instead of removed, even if part can remain attached to the tool 8.

The Applicant considers it preferable for the hole thus made to have a diameter of less than 10 mm, even more preferably less than 7 mm, in order to avoid an excessive displacement of the fibres and an excessive traction and flexural stress thereof.

In the step of inserting the drift 8 of FIGs. 2-5, moreover, the hole 11 is made at the spoke attachment seat 4 and according to the desired inclination since both the position and the inclination are advantageously imposed by the position and direction X of the hole 5 in the mould elements 1, 2, which acts as a guide for the drift 8.

The perforation step described above can be carried out after having heated the tool 8. During the insertion into the composite material 6, the hot tip 10 decreases the viscosity of the polymeric material promoting the displacement of the fibres within it. Of course, since the polymeric material of the composite material 6 is of the thermosetting type, the temperature of the tool 8 should be below the cross-linking temperature thereof. The heating should also take place at a temperature such as to avoid the polymeric material dripping into the hole 5. Purely as an example, the heating temperature can be 30-40°C.

The perforation step described above is preferably carried out by hand, "feeling" firstly the mould with a finger or exerting a light pressure with the drift 8 itself, until the position of the hole 5 in the mould elements 1, 2 is identified. However, markings of the positions of the various holes 5 along the circumference of the mould can be provided.

After the perforation described above, but before the moulding of the rim, a step of coupling an insert 15 with the spoke attachment seat 4 and/or a temporary sealing step of the seat 4 is carried out.

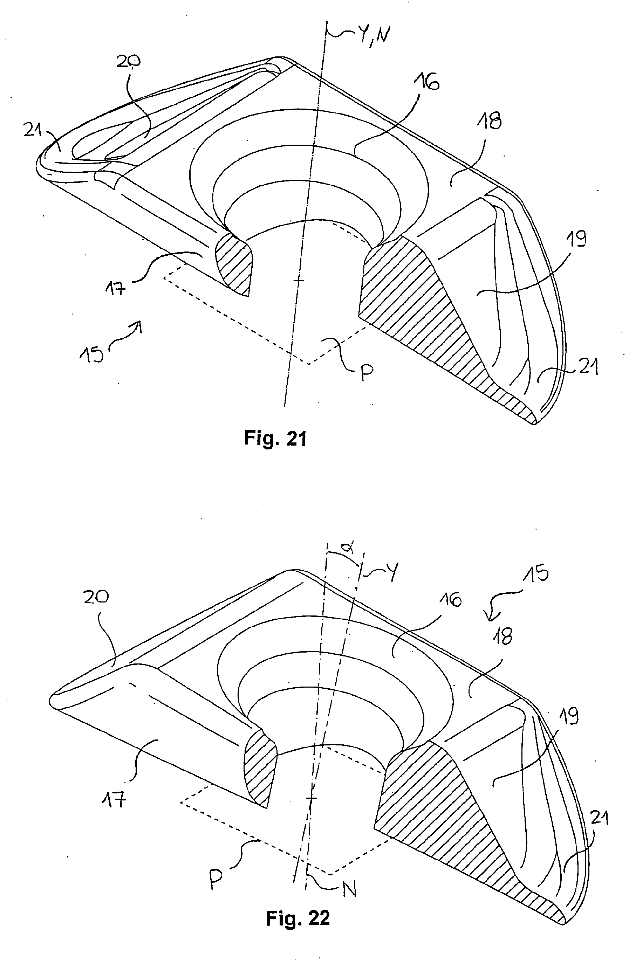

The insert 15, as can be seen in FIGs. 21 and 22, has an elongate body shaped for being housed in the rim being formed, and it is equipped with a hole 16, smooth or threaded, with diameter D3, preferably countersunk, intended to be coaxial with the hole 11 made in the composite material 6. The diameter D3 corresponds to the nominal diameter of the spoke attachment seat 4.

More specifically, the insert 15 has a first surface 17 with a shape matching the shape of the moulding cavity 3 near to the seat 4 and with a suitably smaller size, to rest onto the moulding cavity 3 with the interposition of the composite material 6. In other words, the first surface 17 of the insert 15 has a shape matching that of the inside of the rim being formed, in the neighbourhood of the seat 4, so as to be in contact with the rim over the entire first surface 17. The first surface 17 is sometimes indicated as convex surface 17 in the rest of the description and in the attached claims, since it is substantially a portion of a cylindrical surface, even if it can have a slight concavity in the longitudinal direction, corresponding to the circumferential direction of the rim.

The hole 16 extends in the body of the insert 15 from an intermediate region of the convex surface 17 to a second surface 18, preferably flat and rectangular, opposite said intermediate region of the convex surface 17. The flat rectangular surface 18 joins, at two opposite sides thereof, the convex surface 17. At the other two sides, namely at the longitudinal ends of the insert 15, the flat rectangular surface 18 joins the convex surface 17 through two oblique surfaces 19, 20.

In the embodiment of FIG. 21, the axis Y of the hole 16 is perpendicular to the plane P tangent to the convex surface 17 at the hole 16 itself. Such an embodiment of an insert is suitable for a seat 4 intended for a spoke with radial attachment, in particular for front bicycle wheels. The two oblique surfaces 19, 20 are slightly recessed with respect to the convex surface 17 so as to define edges 21, which are advantageous for the reasons outlined hereinafter.

In the embodiment of FIG. 22, the axis Y of the hole 16 is not perpendicular to the plane P tangent to the convex surface 17 at the hole 16 itself. On the contrary, the axis Y of the hole 16 forms, with the direction N perpendicular to the tangent plane P, a non-zero angle α in the longitudinal plane of the insert. Such an embodiment of the insert 15 is suitable for spokes with tangential, or in any case not radial, attachment to the hub, in particular for rear bicycle wheels.

Preferably, moreover, only the oblique surface 19 is slightly recessed with respect to the convex surface 17 so as to define the edge 21 as shown. In this way it is easy to identify the direction of the axis Y of the hole 16 at sight, so that the insert 15 can be correctly positioned at the seat 4 of the rim being formed.

Preferably, moreover, the flat rectangular surface 18 is perpendicular to the axis Y of the hole 16 as shown.

In both embodiments, thanks to the shape of its convex and in particular substantially cylindrical surface 17, the insert 15 takes up the necessary inclination with respect to the middle plane of the rim to allow a spoke to be mounted with a certain camber.

The insert 15 is made of a material that has characteristics of fatigue resistance and co-mouldability with the composite material 6. Thermoplastic or thermosetting polymeric materials, possibly reinforced by fibre, but also metallic materials are suitable. A particularly preferred material is the polyetherimide marketed as Ultem 2400 by Sabic, Riyadh, Saudi Arabia.

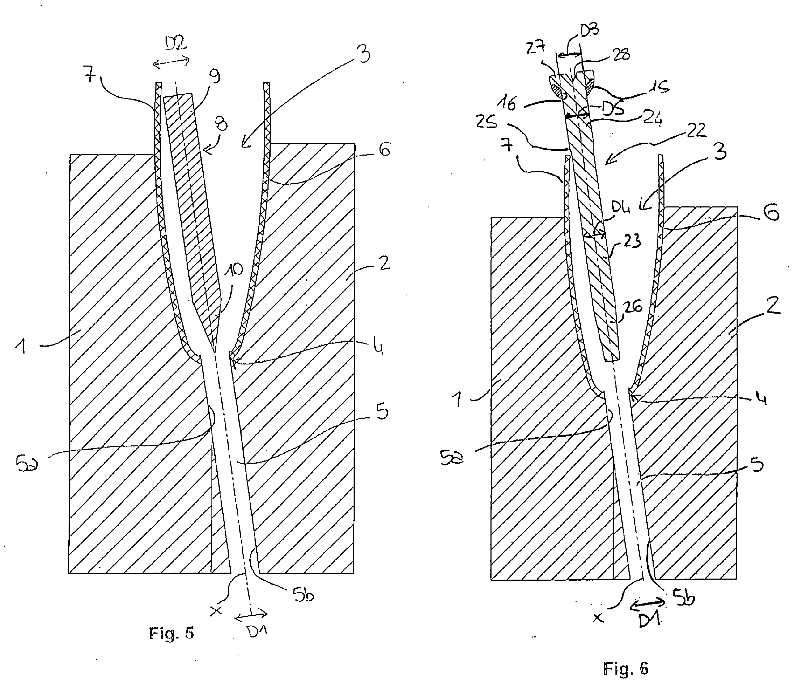

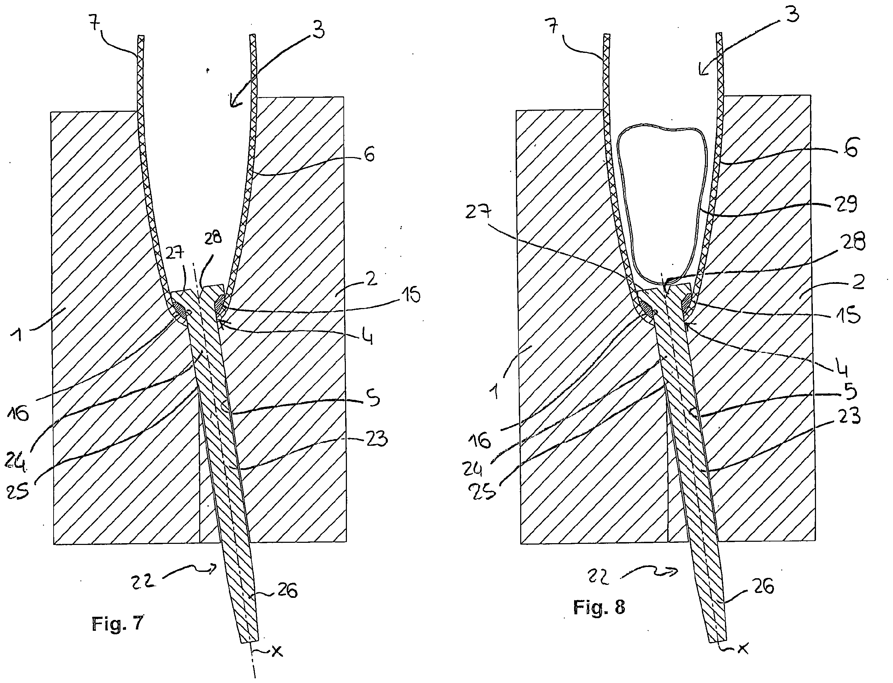

In a preferred embodiment, the aforementioned steps of coupling an insert 15 with the spoke attachment seat 4 and of temporarily sealing the seat 4 are carried out at the same time, as described below with reference to FIGs. 6 and 7, through an auxiliary element 22.

The auxiliary element 22 comprises a shank having a cylindrical guide portion 23 with diameter D4 and a cylindrical forcing portion 24 with diameter D5, coaxial and joined at first ends thereof by a fillet 25, as well as a slightly tapered tip 26 extending from the other end of the guide portion 23. The auxiliary element 22 further comprises a head 27 projecting from the shank from the other end of the forcing portion 24. The head 27 preferably has a weakening notch 28.

The diameter D4 is selected to be less than the diameter D1 of the hole 5 of the mould so as to be able to slide thereinto with a good clearance.

The diameter D5 on the other hand is selected as equal to or preferably greater than the diameter D1 of the hole 5 of the mould so as to stay blocked there by interference. Moreover, a diameter D5 greater than the diameter D1 of the hole 5 of the mould and therefore than the diameter of the hole 11 made in the composite material 6 through the tool 8 allows said hole 11 to be kept widened during the moulding of the rim, and optionally to widen it further. This is advantageous in combination with the use of the insert 15, since it is certain that the insertion of the spoke attaching nipple in the hole 16 of the insert 15 is not hindered by the composite material 6.

The auxiliary element 22 is made of a material that has characteristics of deformability, resistance to the moulding temperatures and pressures of the composite material 6 and/or non-adherence to the composite material 6. A particularly preferred material is latex or soft silicon rubber, for example a silicone having a Shore A hardness of 50.

The auxiliary element 22 is firstly inserted into the hole 16 of the insert 15, by forcing the insert 15 along the shank of the auxiliary element 22 until contact with the head 27 as shown in FIG. 6. It should be noted that the deformability of the auxiliary element 22 allows the insertion of the insert 15 even if the diameter D5 of the forcing portion 24 is greater than the diameter D3 of the hole 16 of the insert 15.

The assembly of auxiliary element 22 and insert 15 is then inserted into the hole 5 of the mould, until the insert 15 rests on the composite material 6, as shown in FIG. 7. In such an insertion operation, the tip 26 of the auxiliary element 22 acts as an aid and the guide portion 23 acts as a guide.

The overall length of the auxiliary element 22 is selected as sufficiently greater than the length of the hole 5 of the mould so that a portion of auxiliary element 22 projects from the inner side of the mould already when the forcing portion 24 has not yet been inserted in the hole 5 of the mould. Such a projecting portion can therefore be gripped, by hand or through a suitable tool, and pulled inwards to force also the forcing portion 24 into the hole 5 of the mould.

The mechanical interference between the forcing portion 24 and the hole 5 of the mould is in general sufficient to axially block the auxiliary element 22, however suitable means can be provided for holding the auxiliary element 22 under traction towards the axis of symmetry of the mould and of the rim being formed (axis of rotation of the wheel). Such traction means, where provided for, are preferably shared by all of the auxiliary elements 22 inserted into the seats 4 distributed along the circumference of the mould and of the rim being formed.

The auxiliary element 22 therefore performs a dual function. On the one hand, it is used to correctly position the insert 15, which as described later on will be co-moulded with the rim, at the spoke attachment seat 4. On the other hand, it acts as a seal of the spoke attachment seat 4 during moulding, making it possible both to block the possible flow of polymeric material into the hole 16 of the insert 15 and/or into the hole 5 of the mould, and to keep the fibres in the position away from the hole 11, imposed thereto during the perforation step described above with reference to FIGs. 2-5. Indeed, since the displacement of the fibres involves a certain traction thereof, they have a certain tendency to go back into the original position before the hardening of the polymeric material.

In order to block the possible flow of polymeric material into the hole 16 of the insert 15 it is advantageous, as described above, for the surface 18 of the insert 15 to be perpendicular to the axis Y of the hole 16 even in the case of an insert 15 for spokes having a tangential attachment.

After the perforation step and the steps of coupling inserts and sealing the spoke attachment seats, where provided for, the rim made of composite material is moulded, for example as described hereinafter with reference to FIGs. 8 to 14.

Firstly, as shown in FIG. 8, an inflatable hose 29 is inserted into the inner portion 3 of the moulding cavity.

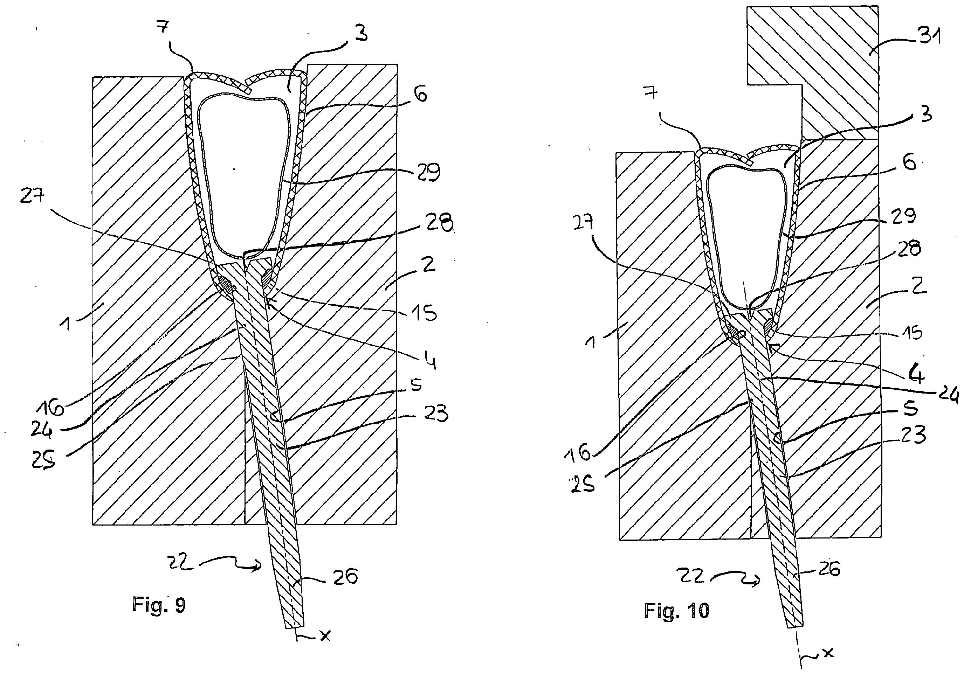

Then, as shown in FIG. 9, the portions 7 of composite material 6 projecting outside from the inner portion 3 of the moulding cavity are folded over the inflatable hose 29, so as to form a closed structure of the section of the rim, or inner rim component, around the inflatable hose.

Then, as shown in FIGs. 10-12, an outer rim component 30 is provided around the closed structure or inner rim component, and the mould is closed through two outer mould elements 31, 32.

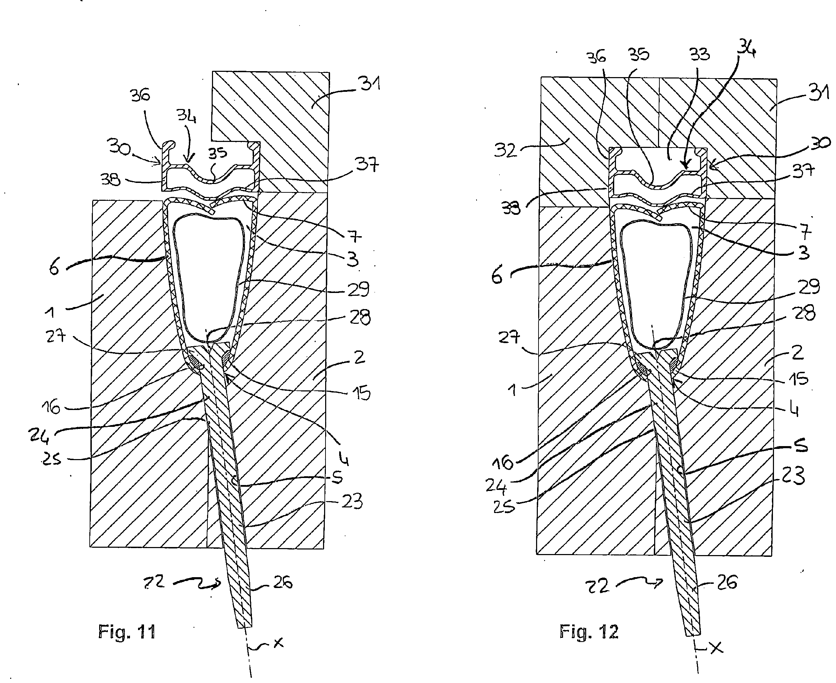

More specifically, the first outer mould element 31 is firstly slipped around the inner mould element 2 with a larger radial size (FIG. 10), then the outer rim component 30 is slid around the inner mould element 1 with a smaller radial size (FIG. 11), and finally the second outer mould element 32 is slipped around the inner mould element 1 (FIG. 12). The outer mould elements 31, 32 define an outer portion 33 of moulding cavity adjoining the inner portion 3 of moulding cavity in the closed condition of the mould. The outer portion 33 of moulding cavity has a shape matching that of the outer rim component 30, and the closure of the mould therefore defines the position of the outer rim component 30 with respect to the inner rim component.

The outer rim component 30 comprises a tyre coupling channel 34 defined by an annular wall commonly called upper bridge 35 and two wings 36 extending substantially in the radial direction.

In the embodiment shown, the outer rim component 30 further has a wall 37 substantially parallel to the upper bridge 35, spaced therefrom through two side walls 38. The wall 37 is intended to couple with the portions 7 of composite material projecting outwards from the inner portion 3 of the moulding cavity that have been folded over the inflatable hose 29 to form an intermediate bridge of the finished rim, which increases its stiffness.

The outer rim component 30 is made of metal, typically aluminium, but it can also be made of composite material.

The size of the outer rim component 30 in the direction of the axis of symmetry of the rim is preferably slightly greater than the size in such a direction of the port of the inner portion 3 of moulding cavity, as shown. This provision makes it possible to ensure that the inner rim component, which is formed from the composite material 6, and the outer rim component 30 are perfectly coaxial to one another.

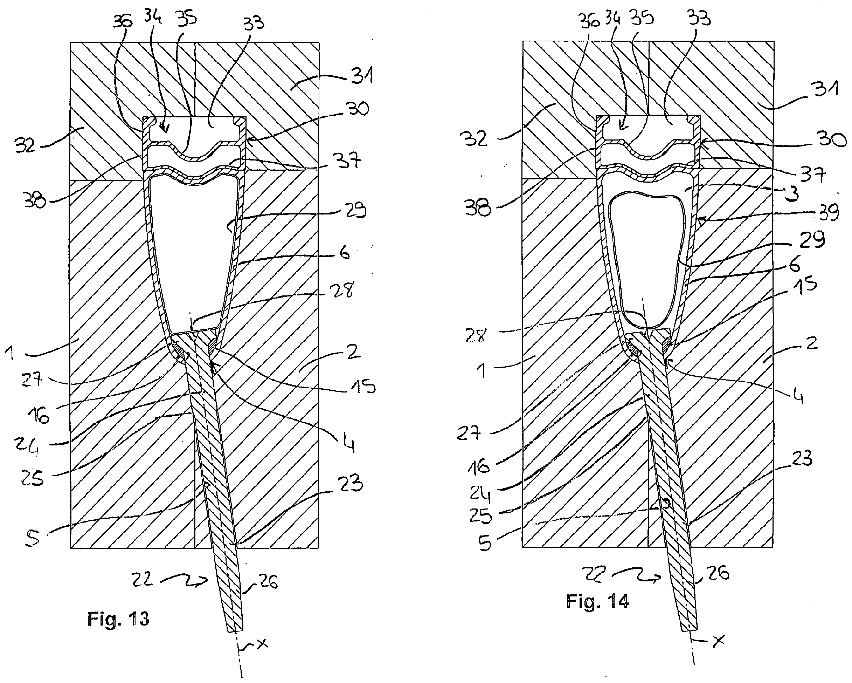

With reference to FIG. 13, in the moulding cavity 3, 33 and inside the inflatable hose 29 a pressure and temperature profile is subsequently applied such as to harden the polymeric material of the composite material 6, in particular such as to cross-link the thermosetting polymeric material of the composite material.

In such a step, indicated as moulding step, the inflatable hose 29 provides for pushing the composite material 6 against the walls of the mould, in particular of the inner mould elements 1, 2 and against the outer rim component 30, and also provides for pushing the insert 15, where provided for, against the composite material 6 at the spoke attachment seat 4.

In such a step, the shape of the insert 15, in particular of the flat rectangular surface 18 and of the inclined walls 19, 20, is advantageous since the inflatable hose 29 does not meet too sudden changes of in section as would be the case if the walls 19, 20 were not inclined, rather perpendicular to the flat rectangular surface 18 and to the convex surface 17.

Typically, said pressure and temperature profile comprises subjecting the composite material 6 to a pressure comprised between 1 bar and 20 bar, preferably between 5 and 15 bar, more preferably of 8 bar, and to a temperature comprised between 60°C and 300°C, preferably between 80°C and 180°C, more preferably of 140° for a time period comprised between 5 min and 3 hours, preferably comprised between 8 min and 2 hours, and more preferably of 1 hour.

During the moulding step, more specifically the cross-linking of the thermosetting polymeric material takes place, which blocks the structural fibre in position, in particular in the position away from the hole 11 shown schematically in FIGs. 17, 18.

In the case of an insert 15 and/or outer rim component 30 made of composite material, preferably a co-cross-linking of their thermosetting polymeric material with the thermosetting polymeric material of the composite material 6 forming the inner rim component also takes place, said co-cross-linking contributing to increasing the structural strength of the rim.

Moreover, during the moulding step, a little polymeric material tends to drip from the walls of the moulding cavity 3, 33 towards the spoke attachment seat 4. The shape of the insert 15 is advantageous since such a polymeric material flows over the edge 21 of the insert 15, fixing it in position in the case of a metallic insert and contributing to fixing it in position in the case of an insert made of composite material.

Vice-versa, the provision of the auxiliary element 22 allows the remaining areas of the insert 15 and in particular its hole 16 to be protected against the flow of polymeric material, which could block it.

With reference to FIG. 14, once the cross-linking or hardening cycle of the composite material 6 has ended and once the pressure in the inflatable hose 29 has been released, the latter deflates and detaches from the inner wall of the rim 39 now formed.

With reference to FIGs. 15 and 16, the auxiliary element 22, where provided for, is extracted by pulling it inwards. The notch 28 in the head 27 helps the deformation of the head 27 itself for its passage through the hole 5 in the mould.

The insert 15 on the other hand remains constrained to the composite material 6, in the rim 39 now formed. The insert 15 is in particular firmly locked in position and therefore during the subsequent insertion and tightening of the spoke with the possible nipple there is no sliding of the insert 15 on the composite material, which could lead to wear thereof by friction. Its convex surface 17, thanks also to its elongate shape and to the shape-coupling with the rim, allows an optimal distribution on the rim 39 of the tensions imparted by the spoke.

The rim 39 thus formed can thus be extracted from the mould, after it has been opened (not shown). The flexible hose 29 can be extracted from the rim, for example through a hole provided for housing the inflation valve of the tyre.

The auxiliary element 22 can be reused to manufacture other rims, as long as it maintains adequate elasticity.

When the aforementioned material is used, the auxiliary elements 22 can be used on average two or three times.

In the Table below the preferred values of the various diameters described above are given, in the example case of nipples with an outer diameter of 4.65 mm, usable for example with 1.5 mm steel spokes, and in the example case of nipples with an outer diameter of 6.65 mm, usable for example with 2.6 mm aluminium spokes.

**Table I**

| | 4.65 mm Nipples [mm] | 6.65 mm Nipples [mm] |
|---|---|---|
| Nominal diameter of the seat 4 | 4.95 | 6.95 |
| Diameter D1 of the hole 5 of the mould | 5 | 7 |
| Diameter D2 of the shank 9 of the perforation tool 8 | 4.95 | 6.95 |
| Diameter D3 of the hole 16 of the insert 15 | 4.95 | 6.95 |
| Diameter D4 of the guide portion 23 of the auxiliary element 22 | 4.5 | 6.5 |
| Diameter D5 of the forcing portion 24 of the auxiliary element 22 | 6 | 8 |

Of course, a skilled in the art can bring further modifications, replacements and omissions of the various components and of the various process steps described above to the invention described above in order to satisfy specific and contingent application requirements, in any case encompassed within the scope of protection as defined by the following claims. The following should only be taken as an example.

Outside of the scope of the present invention, instead of using preimpregnated composite material 6, a material in dry fibre can be used during the initial steps of the process, so that in particular the perforation step can take place on the fibre material only. The polymeric material is subsequently injected, preferably in several points, to encompass the fibre material, before the application of the temperature and pressure profile necessary for the hardening of the composite material.

Also in the case of dry fibres, they are progressively displaced by the tip 10 of the tool 8 in the steps illustrated with reference to FIGs. 2-5.

Outside of the scope of the present invention, the perforation step can in principle also be carried out outside of the mould, before inserting the composite material 6 into the mould. In this case the mould can be without the holes 5.

According to the structure of the fibre and/or the shape of the tip of the tool 8 used during the perforation step, there could be amassments of fibre in a different position and number than those shown in FIGs. 17, 18, including a single amassment of fibre.

Outside of the scope of the present invention, the insert 15 can be left out. In this case, the head 27 of the auxiliary element 22 (if used), which then has the sole function of temporarily sealing the spoke attachment seat 4, preferably has a rounded progression to better adhere to the composite material 6 in the neighbourhood of the spoke attachment seat 4.

In the auxiliary element 22, the head 27 with a weakening notch 28, which allows the extraction from the inner side of the mould, can be replaced for example by an end of the forcing portion 24 without a head, but equipped with a threading matching a threading of the hole 16 of the insert 15.

The provision of a forcing diameter D5 in a deformable auxiliary element 22, which allows the sealing of the seat 4, can be replaced by other sealing means, for example by providing for an auxiliary element that is not deformable, but equipped with one or more O-rings.

The sealing of the seat 4 during the moulding can in any case also be omitted, possibly by providing for a cleaning step after moulding.

The auxiliary element 22 can be coated with a film of release material to avoid it adhering to the moulded composite material 6.

The insert 15 can be provided with a collar projecting from the convex surface 17, suitable for inserting into the hole 11 of the composite material 6. In this case, the collar itself avoids the re-closing of the hole 11 in the composite material 6 and the auxiliary element 22 may not be necessary, even if it may still be advantageous to avoid the polymeric material dripping into the hole 16 of the insert 15 and/or into the hole 5 of the mould and/or to keep the insert 15 in position during moulding.

In case the auxiliary element 22 is not used, the holes 5 of the mould can be blind holes, having a depth just sufficient to house the tip 10 and a part of the shank 9 of the tool 8 during the perforation operation described with reference to FIGs. 2-5.

Moreover, the holes 5 of the mould can be blind even in the case of use of the auxiliary element 22, when however the type of spoke pattern and therefore the arrangement of the various auxiliary elements is not such as to prevent the mould from re-opening. In this case, the auxiliary element 22 with the insert 15 are for example forced towards the hole 5 of the mould by pressing from the side of the moulding cavity 3.

The perforation step can be carried out at the same time as the step of coupling an insert 15 with the spoke attachment seat 4 and/or as the temporary sealing step of the seat 4. In other words, the perforation tool 8 can consist of the auxiliary element 22 itself, which is then inserted into the hole 5 of the mould, thereby displacing the fibres, immediately after the application of the composite material 6 or of the fibre material. In this case it is preferable, with respect to the deformable material described above, to use a rigid material.

The process described above can also be applied to only some of the spoke attachment seats, making other spoke attachment seats in the rim with conventional technology.

The rim 39 shown in FIG. 14 suits particularly well to tubeless wheels, especially when used in combination with the teachings of document EP1418064, incorporated herein by reference.

It should however be understood that the invention applies, in its various aspects, also to rims for wheels with an air chamber, and for wheels with hoses (clincher).

In the case of wheels with tubular tyres it is for example possible to omit the outer rim component 30 altogether, making the tyre coupling channel directly with the composite material 6 initially laid in the mould.

Even in the case of wheels with an air chamber, it is possible to omit the outer rim component 30 altogether. Indeed, the wings 36 for holding the tyre can be formed directly with the composite material 6 initially laid in the mould, in other words by making a rim with open section or single channel. In this case, preferably instead of an inflatable hose 29 a foamed material will be used.

In this case of a rim with an open section, like when a closed structure is used, but the upper bridge or one of the side walls can be provided with openings at or near to the spoke attachment seats 4, the auxiliary element 22 can also be extracted from such openings, and therefore lack the weakening notch 28.

In the case of wheels with a tubeless tyre or with an air chamber, it should be understood that in the outer rim component 30, if provided for, the inner wall 37 and the side walls 38 can be absent, the portions 7 of composite material thus being coupled directly with the upper bridge 35. The rim thus formed is therefore without an intermediate bridge.

Vice-versa, the outer rim component 30 can be provided with further stiffening walls.

There can be stiffening walls also in the composite material 6.

Instead of using an outer rim component 30, it is also possible to make a rim with wings for a tubeless wheel, or for tyre and air chamber, with a closed structure, in other words with a shape in cross section not dissimilar to the one shown, possibly without the stiffening wall 37, through a double folding of layers of composite material as described in EP1231077, incorporated herein by reference (namely by folding a part of layers of the sections 7 around the inflatable hose 29, laying one or more core(s) of foamed material over the folded layers, and folding another part of layers of the sections 7 over said one or more core(s) of foamed material).

It can also be provided to incorporate a reinforcement element as described in EP 1506882, incorporated herein by reference.

Those skilled in the art will understand how to adapt the shape of the mould elements 1, 2, 31, 32 and in particular of the moulding cavity 3, 33, and the process steps, to the shape of the rim that it is wished to produce, not only as stated above to a rim for a tyre and air chamber or to a rim for a tubular tyre, but also for example to a rim with high, medium or low profile; to an asymmetric rim, etc.

The division of the mould into the four inner and outer elements 1, 2, 31, 32 is therefore just an example and different divisions can be provided.

Instead of providing for a mould for every type of spoke pattern of the wheel models in which the rim is to be inserted, it is also conceivable to provide a mould equipped with holes 5 extending according to all the possible directions of the spokes in the various spoke patterns, and on each occasion use only the holes 5 corresponding to the spoke pattern of interest, possibly plugging the remaining holes.

The shape of the insert 15 and in particular of its first surface 17 can be suitably modified with respect to the substantially cylindrical one shown in FIGs. 21, 22, according to the shape of the rim that it is wished to produce, so as to keep a shape-coupling with the composite material 6 onto a particularly large surface.

Moreover, it is possible to provide for an inclination of the axis Y of the hole 16 of the insert 15 - with respect to the normal N to the plane P tangent to the first surface 17 at the hole 16 - also in the transversal direction of the insert 15, so as to allow or facilitate the mounting of spokes having a certain camber.

As discussed above, the insert 15 of FIGs. 21, 22 can also find advantageous application in a process for manufacturing a rim and/or, outside of the scope of the present invention, in a rim of a conventional type, even made of metal.

For example, outside of the scope of the present invention, the insert 15 can be co-moulded in a rim at least partially made of composite material in which the holes are made by shearing of the fibres, for example by drilling after moulding or in another way before moulding.

Outside of the scope of the present invention, the insert 15 can also be used by gluing it in a rim made of composite material already moulded or in a rim made of extruded metallic material, or even using it simply resting on the rim already moulded or extruded, once again irrespective of the method for making the holes.

If necessary, the insert 15 can be brought into position by inserting it from a suitable opening in the wall of the rim that is made near to the spoke attachment seat 4, or that is distant therefrom, in such a case exploiting, for example, the teachings of the aforementioned document EP1418064.

The insert 15 can also be constrained to the rim at the spoke attachment seat 4 through co-moulding or, outside of the scope of the present invention, through gluing, after a first moulding step of the wall in which the spoke attachment seat is made, followed by a subsequent moulding step in which the structure of the rim is completed.

It should therefore be understood that the various provisions described above with reference to the insert 15 represent innovative aspects in themselves with respect to the closest prior art, not necessarily in connection with the provision of holes made with displacement of structural fibre.

For example, an insert comprising a body having a first surface configured for a shape-coupling with a rim in the proximity of a spoke attachment seat thereof is particularly innovative.

An insert having a through hole having a predetermined inclination with respect to a plane tangent to a surface thereof at the hole itself is also particularly innovative.

An insert having a projecting edge along at least one section of a surface thereof configured for coupling with a rim is also particularly innovative.

A rim for tubeless wheels or for a tubular tyre made of composite material, comprising a closed structure in cross-section and comprising a constrained insert, in other words glued or co-moulded, at a spoke attachment seat, inside the closed structure, is also particularly innovative.

## Claims

1. Process for manufacturing a bicycle wheel rim (39) at least in part made of composite material, comprising the steps of:
- moulding in a moulding station a composite material (6) comprising structural fibre incorporated in a thermosetting polymeric material into the shape of at least part of a bicycle rim (39),
- forming at least one perforated spoke attachment seat (4, 11) in said at least one part of a bicycle rim (39),
- coupling an insert (15) provided with a hole (16) at said at least one perforated seat (4, 11), said insert (17) comprising a first surface (17) configured for shape-coupling with the rim (39) at said at least one spoke attachment seat (4) and an edge (21) projecting along at least one section of said first surface (17);
wherein said step of forming at least one perforated seat (4, 11) is carried out in said moulding station on the structural fibre preimpregnated with thermosetting polymeric material with displacement of structural fibre and of thermosetting polymeric material before said moulding step, and
wherein said step of coupling an insert (15) is carried out in said moulding station before said moulding step, so that the insert (15) is co-moulded with the rim (39) and constrained to the composite material (6) through an amassment of polymeric material on such an edge (21).

2. Process according to claim 1, wherein the step of forming at least one perforated seat (4, 11) is carried out by inserting a pointed but not cutting tool (8) through the structural fibre and thermosetting polymeric material into a hole (5) of a mould (1, 2, 31, 32) in which said moulding step is carried out.

3. Process according to any of the previous claims, wherein the step of forming at least one perforated seat (4, 11) is carried out at the same time as a step of slightly heating the thermosetting polymeric material.

4. Process according to any of the previous claims, comprising the step of sealing said at least one perforated seat (4, 11) during said moulding step.

5. Process according to any of the previous claims, comprising the steps of providing an auxiliary element (22) having a shank (23-26) and a head (27), inserting the shank (23-26) of said auxiliary element (22) into said hole (16) of said insert (15) and into said hole (5) of the mould (1, 2, 31, 32) and, after the moulding step, removing said auxiliary element (22).

6. Process according to claim 5, wherein said hole (5) of the mould (1, 2, 31, 32) is a through hole and said auxiliary element (22) inserted in said hole (16) of the insert (15) is inserted into said through hole (5) of the mould (1, 2, 31, 32) from the side of a moulding cavity (3, 33) and removed from the opposite side.

7. Bicycle rim (39) comprising a wall made of composite material (6) comprising structural fibres incorporated in a thermosetting polymeric material and a plurality of perforated spoke attachment seats (4, 11), wherein at least one perforated seat (4, 11) comprises a hole (11) in said wall and at least one amassment (12, 13) of structural fibres in the neighbourhood of the hole (11), wherein the rim (39) further comprises an insert (15) at at least one of said perforated seats (4, 11), **characterised in that** said insert (15) comprises a first surface (17) configured for shape-coupling with the rim (39) in the proximity of said at least one spoke attachment seat (4) of the rim (39), and has a through hole (16), said insert (15) being constrained to said composite material (6) and comprising an edge (21) projecting along at least one section of said first surface (17),
wherein the insert (15) is co-moulded with the rim (39), and
wherein there is an amassment of polymeric material on the edge (21) of said insert (15).

8. Rim (39) according to claim 7, wherein the composite material (6) in the regions without perforated seats (4, 11) comprises unidirectional or bidirectional fibres, and at said hole (11) some fibres have a length with curvilinear progression, in particular substantially semi-circular.

9. Rim (39) according to any of claims 7-8, wherein said insert (15) comprises an elongate body having said first surface (17) with a shape substantially matching the rim (39) at said at least one spoke attachment seat (4).

10. Rim (39) according to any of claims 7-9, wherein said through hole (16) of the insert (15) has a predetermined inclination with respect to the plane (P) tangent to the first surface (17) at the hole (16) itself.

## Patentansprüche

1. Verfahren zur Herstellung einer Fahrradfelge (39), die wenigstens teilweise aus Verbundmaterial gefertigt wird, umfassend folgende Schritte:
- Ausformen eines Verbundmaterials (6) in einer Ausformstation, umfassend eine strukturelle Faser, die in ein duroplastisches Polymermaterial in die Form wenigstens eines Teils einer Fahrradfelge (39) eingearbeitet wird;
- Ausbilden wenigstens eines perforierten Speichenbefestigungssitzes (4, 11) in dem wenigstens einen Teil einer Fahrradfelge (39);
- Koppeln eines Einsatzes (15), der mit einem Loch (16) versehen ist, an dem wenigstens einen perforierten Sitz (4, 11), wobei der Einsatz (17) eine erste Oberfläche (17), die zum formschlüssigen Koppeln mit der Felge (39) an dem wenigstens einen Speichenbefestigungssitz (4) eingerichtet ist und eine Kante (21) umfasst, die entlang wenigstens eines Abschnitts der ersten Oberfläche (17) hervorragt;
wobei der Schritt des Ausbildens wenigstens eines perforierten Sitzes (4, 11) in der Ausformstation an der Strukturfaser, die mit einem duroplastischen Polymermaterial vorimprägniert ist, mit Verdrängung der Strukturfaser und des duroplastischen Polymermaterials vor dem Ausformschritt ausgeführt wird, und
der Schritt des Koppelns eines Einsatzes (15) in der Ausformstation vor dem Ausformschritt ausgeführt wird, so dass der Einsatz (15) mit der Felge (39) zusammen ausgeformt und auf das Verbundmaterial (6) durch eine Ansammlung von Polymermaterial an einer derartigen Kante (21) beschränkt wird.

2. Verfahren nach Anspruch 1, bei dem der Schritt des Ausbildens wenigstens eines perforierten Sitzes (4, 11) ausgeführt wird, indem ein spitzes, aber nicht schneidendes Werkzeug (8) durch die Strukturfaser und das duroplastische Polymermaterial in ein Loch (5) einer Form (1, 2, 31, 32) eingeführt wird, in der der Ausformschritt ausgeführt wird.

3. Verfahren nach einem der vorhergehenden Ansprüche, bei dem der Schritt des Ausbildens wenigstens eines perforierten Sitzes (4, 11) gleichzeitig mit einem Schritt des leichten Erhitzens des duroplastischen Polymermaterials ausgeführt wird.

4. Verfahren nach einem der vorhergehenden Ansprüche, umfassend den Schritt des Versiegelns des wenigstens einen perforierten Sitzes (4, 11) während des Ausformschrittes.

5. Verfahren nach einem der vorhergehenden Ansprüche, umfassend die Schritte des Bereitstellens eines Hilfselementes (22) mit einem Schaft (23-26) und einem Kopf (27), Einsetzen des Schaftes (23-26) des Hilfselementes (22) in das Loch (16) des Einsatzes (15) und in das Loch (5) der Form (1, 2, 31, 32) und, nach dem Ausformungsschritt, Entfernendes Hilfselementes (22).

6. Verfahren nach Anspruch 5, bei dem das Loch (5) der Form (1, 2, 31, 32) ein Durchgangsloch ist und das Hilfselement (22), das in das Loch (16) des Einsatzes (15) eingeführt wird, von der Seite eines Ausformhohlraums (3, 33) in das Durchgangsloch (5) der Form (1, 2, 31, 32) eingeführt und von der gegenüberliegenden Seite entnommen wird.

7. Fahrradfelge (39), umfassend eine Wand aus Verbundmaterial (6), umfassend Strukturfasern, die in ein duroplastisches Polymermaterial eingearbeitet sind, und eine Vielzahl perforierter Speichenbefestigungssitze (4, 11), wobei wenigstens ein perforierter Sitz (4, 11) ein Loch (11) in der Wand und wenigstens eine Ansammlung (12, 13) von Strukturfasern in der Nähe des Lochs (11) umfasst, wobei der Rand (39) weiterhin einen Einsatz (15) an wenigstens einem der perforierten Sitze (4, 11) umfasst,
**dadurch gekennzeichnet, dass**
der Einsatz (15) eine erste Oberfläche (17) umfasst, die zur formschlüssigen Kopplung mit der Felge (39) in der Nähe des wenigstens einen Speichenbefestigungssitzes (4) der Felge (39) eingerichtet ist, und ein Durchgangsloch (16) aufweist, wobei der Einsatz (15) auf das Verbundmaterial (6) beschränkt ist und eine Kante (21) umfasst, die entlang wenigstens eines Abschnitts der ersten Oberfläche (17) hervorragt;
wobei der Einsatz (15) mit der Felge (39) zusammen ausgeformt ist und
es eine Ansammlung von Polymermaterial an dem Rand (21) des Einsatzes (15) gibt.

8. Felge (39) nach Anspruch 7, bei der das Verbundmaterial (6) in den Bereichen ohne perforierte Sitze (4, 11) unidirektionale oder bidirektionale Fasern umfasst und an dem Loch (11) einige Fasern eine Länge mit krummlinigem Verlauf haben, insbesondere im wesentlichen halbkreisförmig sind.

9. Felge (39) nach einem der Ansprüche 7 bis 8, bei der der Einsatz (15) einen länglichen Körper mit der ersten Oberfläche (17) in einer Form umfasst, die im Wesentlichen mit der Felge (39) an dem wenigstens einen Speichenbefestigungssitz (4) übereinstimmt.

10. Felge (39) nach einem der Ansprüche 7 bis 9, bei der das Durchgangsloch (16) des Einsatzes (15) eine vorbestimmte Neigung in Bezug auf die Ebene (P) aufweist, die die Tangente zu der ersten Oberfläche (17) an dem Loch (16) an sich ist.

## Revendications

1. Procédé pour fabriquer une jante de roue de bicyclette (39) qui est au moins en partie réalisée en un matériau composite, comprenant les étapes consistant à :
- mouler, dans une station de moulage, un matériau composite (6) qui comprend une fibre structurelle qui est incorporée dans un matériau polymérique thermodurcissable selon la forme d'au moins une partie d'une jante de bicyclette (39) ;
- former au moins un siège de fixation de rayon perforé (4, 11) dans ladite au moins une partie d'une jante de bicyclette (39) ;
- coupler un insert (15) qui est muni d'un trou (16) au niveau dudit au moins un siège de fixation de rayon perforé (4, 11), ledit insert (15) comprenant une première surface (17) qui est configurée pour un couplage en termes de forme avec la jante (39) au niveau dudit au moins un siège de fixation de rayon perforé (4) et un bord (21) qui fait saillie le long d'au moins une section de ladite première surface (17) ;
dans lequel ladite étape de formation d'au moins un siège de fixation de rayon perforé (4, 11) est mise en œuvre dans ladite station de moulage sur la fibre structurelle qui est pré-imprégnée par le matériau polymérique thermodurcissable moyennant le déplacement de la fibre structurelle et du matériau polymérique thermodurcissable avant ladite étape de moulage ; et
dans lequel ladite étape de couplage d'un insert (15) est mise en œuvre dans ladite station de moulage avant ladite étape de moulage, de telle sorte que l'insert (15) soit co-moulé avec la jante (39) et soit contraint en lien avec le matériau composite (6) au travers d'une accumulation de matériau polymérique sur un tel bord (21).

2. Procédé selon la revendication 1, dans lequel l'étape de formation d'au moins un siège de fixation de rayon perforé (4, 11) est mise en œuvre en insérant un outil pointu mais non coupant (8) au travers de la fibre structurelle et du matériau polymérique thermodurcissable à l'intérieur d'un trou (5) d'un moule (1, 2, 31, 32) à l'intérieur duquel ladite étape de moulage est mise en œuvre.

3. Procédé selon l'une quelconque des revendications précédentes, dans lequel l'étape de formation d'au moins un siège de fixation de rayon perforé (4, 11) est mise en oeuvre en même temps qu'une étape de chauffage léger du matériau polymérique thermodurcissable.

4. Procédé selon l'une quelconque des revendications précédentes, comprenant l'étape de scellement dudit au moins un siège de fixation de rayon perforé (4, 11) pendant ladite étape de moulage.

5. Procédé selon l'une quelconque des revendications précédentes, comprenant l'étape de fourniture d'un élément auxiliaire (22) qui comporte une tige (23 - 26) et une tête (27), l'étape d'insertion de la tige (23 - 26) dudit élément auxiliaire (22) à l'intérieur dudit trou (16) dudit insert (15) et à l'intérieur dudit trou (5) du moule (1, 2, 31, 32) et, après l'étape de moulage, l'étape d'enlèvement dudit élément auxiliaire (22).

6. Procédé selon la revendication 5, dans lequel ledit trou (5) du moule (1, 2, 31, 32) est un trou traversant et ledit élément auxiliaire (22) qui est inséré dans ledit trou (16) de l'insert (15) est inséré à l'intérieur dudit trou traversant (5) du moule (1, 2, 31, 32) depuis le côté d'une cavité de moulage (3, 33) et en est enlevé depuis le côté opposé.

7. Jante de bicyclette (39) comprenant une paroi réalisée en un matériau composite (6) qui comprend des fibres structurelles qui sont incorporées dans un matériau polymérique thermodurcissable et une pluralité de sièges de fixation de rayon perforés (4, 11), dans laquelle au moins un siège de fixation de rayon perforé (4, 11) comprend un trou (11) dans ladite paroi et au moins une accumulation (12, 13) de fibres structurelles au voisinage du trou (11), dans laquelle la jante (39) comprend en outre un insert (15) au niveau d'au moins l'un desdits sièges de fixation de rayon perforés (4, 11), **caractérisée en ce que** ledit insert (15) comprend une première surface (17) qui est configurée pour un couplage en termes de forme avec la jante (39) à proximité dudit au moins un siège de fixation de rayon perforé (4) de la jante (39), et comporte un trou traversant (16), ledit insert (15) étant contraint en lien avec ledit matériau composite (6) et comprenant un bord (21) qui fait saillie le long d'au moins une section de ladite première surface (17) ;
dans laquelle l'insert (15) est co-moulé avec la jante (39) ; et
dans laquelle il y a une accumulation de matériau polymérique sur le bord (21) dudit insert (15).

8. Jante (39) selon la revendication 7, dans laquelle le matériau composite (6) dans les régions sans sièges de fixation de rayon perforés (4, 11) comprend des fibres unidirectionnelles ou bidirectionnelles, et au niveau dudit trou (11), certaines fibres présentent une longueur selon une progression curviligne, en particulier sensiblement semi-circulaire.

9. Jante (39) selon l'une quelconque des revendications 7 et 8, dans laquelle ledit insert (15) comprend un corps allongé qui comporte ladite première surface (17) selon une forme qui correspond sensiblement à la jante (39) au niveau dudit au moins un siège de fixation de rayon perforé (4).

10. Jante (39) selon l'une quelconque des revendications 7 à 9, dans laquelle ledit trou traversant (16) de l'insert (15) présente une inclinaison prédéterminée par rapport au plan (P) qui est tangent à la première surface (17) au niveau du trou (16) lui-même.
